# EUROPÄISCHE PATENTSCHRIFT

(11) **EP 0 905 843 B1**
(45) Veröffentlichungstag und Bekanntmachung des Hinweises auf die Patenterteilung: **09.02.2005**
(21) Anmeldenummer: 98115300.0
(22) Anmeldetag: 14.08.1998
(51) Int. Cl.: H02G 3/06

(54) **Anordnung zur schraubenlosen Verbindung von Gitterkabelbahnen**
Screwless Fastening device for wire cable trays
Dispositif d'attache sans vis pour canalisations de cables en treillis

(30) Priorität: 24.09.1997 DE 19742095; 03.04.1998 DE 19815047
(43) Veröffentlichungstag der Anmeldung: 31.03.1999
(73) Patentinhaber: OBO Bettermann GmbH & Co. KG., 58710 Menden (DE)
(72) Erfinder: Nickel, Wilfried, 58710 Menden (DE); Wesch, Rainer Dipl.-Ing., 58730 Fröndenberg (DE)
(74) Vertreter: Köchling, Conrad-Joachim, Dipl.-Ing.

(56) Entgegenhaltungen:
- EP-A- 0 571 307
- EP-A- 0 617 493
- FR-A- 2 711 208

## Beschreibung

Die Erfindung betrifft eine Anordnung zur schraubenlosen Verbindung von Gitterkabelbahnen, die aus in Reihe verlegten Gitterbahnabschnitten bestehen, deren einander zugewandte Enden gestoßen und mittels Verbindungselementen verbindbar beziehungsweise verbunden sind, wobei die Gitterbahnabschnitte aus Längsstäben und etwa U-förmig geformten, voneinander in Längsrichtung beabstandeten Querstäben zusammengesetzt sind.

Aus dem Stand der Technik sind vielerlei Verbinder für Gitterkabelbahnen bekannt. Beispielsweise wird hierzu auf die DE 295 04 839 U1 verwiesen. Die bisher üblichen schraubenlosen Verbinder sind relativ schwierig zu handhaben. Zudem sind sie sehr groß, so daß ein relativ großer Materialeinsatz erforderlich ist. Zusätzlich ist es bei den bisher üblichen Verbindern erforderlich, die aneinander stoßenden Gitterbahnabschnitte so anzuordnen, daß die an dem Endbereich befindlichen Querstäbe Abstand zueinander aufweisen, weil diese im Bodenbereich der entsprechenden Gitterkabelbahn angeordneten Querstäbe zusätzlich durch Schraubverbinder verbunden werden müssen. Der Abstand der Querstäbe der benachbarten Elemente muß dabei mindestens so groß sein, daß eine entsprechende Schraube mit ihrem Schaft den Abstandsspalt durchgreifen kann.

Ausgehend von diesem Stand der Technik liegt der Erfindung die Aufgabe zugrunde, eine Anordnung gattungsgemäßer Art zu schaffen, bei der Verbindungselemente zur Anwendung kommen können, die mit geringem Materialeinsatz zu fertigen sind, die einfach zu handhaben sind und die sowohl im Schenkelbereich der Gitterkabelbahnabschnitte als auch im Bodenbereich derselben eingesetzt werden können.

Zur Lösung dieser Aufgabe schlägt die Erfindung vor, daß jedes Verbindungselement aus einem rinnenartigen, im Querschnitt etwa U-förmigen im wesentlichen formstabilen Halter besteht, dessen Schenkelabstand dem Drahtdurchmesser angepaßt ist, so daß die beiden aneinander liegenden Querstäbe der gestoßenen Gitterbahnabschnitte zwischen die Schenkel passend einfügbar sind, wobei an den der Basis fern liegenden Bereichen der Schenkel den von den Schenkeln gebildeten Spalt geringfügig einengende Ausformungen ausgebildet sind, die in der Verbindungssollage an den im Spalt befindlichen, an der Basis anliegenden Stabbereichen der Querstäbe auf der der Basis abgewandten Seite anliegen.

Der im Querschnitt etwa U-förmige Halter kann einfach gefertigt werden, wobei nur ein geringer Materialeinsatz erforderlich ist. Zur Verbindung der aneinander gestoßenen Gitterbahnabschnitte wird der Halter über die im Stoßbereich aneinander liegenden Querstäbe aufgesteckt, wobei der Halter vorzugsweise aus formstabilen Material besteht, welches nicht oder nur unwesentlich federnd nachgiebig ist. Der Halter kann zur Verbindung der aneinander liegenden Querstäbe im Schenkelbereich der Gitterkabelbahn und ebenso auch im Bodenbereich der Gitterkabelbahnen eingesetzt werden. Die den Spalt zwischen den Schenkeln des Halters geringfügig einengenden Ausformungen dienen dazu, geringfügige Übergriffsbereiche zu schaffen, so daß der Halter in der Sollage dadurch arretiert ist, daß einerseits die Basis des Halters an den entsprechenden Querstäben anliegt und andererseits die einengenden Ausformungen, die geringfügig über die Innenseite der Schenkel vorragen, ebenfalls geringfügig über die freie Stirnseite der Querstäbe greifen, so daß ein formschlüssiger Sitz erreicht ist.

Vorzugsweise ist vorgesehen, daß die einengenden Ausformungen an den Enden der vom Halter geformten Rinne jeweils beidseits und beidenends der Rinnenform ausgebildet sind.

Durch diese Vierfachanordnung der einengenden Ausformungen ist eine sichere Arretierung in der Montagesollage erreicht, wobei zudem die Arretierung in gewisser Weise bei der Montage des Halters auf den Querstäben hilfreich ist.

Bevorzugt ist vorgesehen, daß die Länge der vom Halter geformten Rinne nur wenig kleiner als der Abstand der an die Querstäbe angeschlossenen benachbarten Längsstäbe voneinander ist. Auf diese Weise kann der Halter den gesamten zwischen zwei benachbarten Längsstäben befindlichem Bereich der Querstäbe ausfüllen und so eine sichere Halterung bewirken.

Bevorzugt ist zudem vorgesehen, daß die Halter an den Schenkeln und/oder an der Basis der gestoßenen Gitterbahnabschnitte angeordnet sind.

Desweiteren ist bevorzugt, daß die einengenden Ausformungen jeweils um die Schenkelmaterialstärke oder weniger gegenüber den Schenkeln des Halters zueinander gerichtet vorragen.

Um eine Montagehilfe zur Montage des Halters zu erreichen, ist zudem vorgesehen, daß an die der Basis des Halters abgewandten Enden der Schenkel Handhabungsbereiche anschließen, die durch quer zum Rinnenspalt etwa parallel zur Basis verlaufende, voneinander weg und in Flucht zueinander gerichtete Teile des Halters gebildet sind.

Dabei ist bevorzugt vorgesehen, daß die einengenden Ausformungen von den Schenkeln in die Handhabungsssbereiche übergehend geformt sind.

Zudem ist vorgesehen, daß der Halter mit seiner zwischen den Schenkeln befindlichen Rinne auf einen der Querstäbe an der Stoßstelle der Gitterbahnabschnitte aufsteckbar und um den Querstab als Drehachse in die den anderen Querstab der Stoßstelle mit erfassende Sollposition drehbar ist.

Die Ausbildung des Halters erlaubt eine besonders einfache manuelle Montage des Halters auf den einander benachbarten Querstäben an der Stoßstelle der Gitterbahnabschnitte, wobei während der Montage zunächst durch die am einen Schenkel vorgesehenen Einengungen ein Halt gebildet ist, so daß der Halter um den einen Querstab drehbar ist, während die an dem anderen Schenkel befindlichen Einengungen unter Krafteinwirkung während der Drehung des Halters an dem zweiten Querstab an der Stoßstelle vorbeigleiten, bis der Halter seine Montagesollage erreicht hat, in welcher die Handhabungsbereiche parallel zur Längserstreckung der Gitterkabelbahn ausgerichtet sind. Die Anordnung ist dabei vorzugsweise derart vorgesehen, daß die Basis des Halters relativ dem Inneren der Gitterkabelbahn zugewandt ist, während die Handhabungsbereiche quasi in der Außenflucht der Gitterkabelbahn liegen.

Bevorzugt ist vorgesehen, dass der Halter ein Stahlblechformteil ist.

Zudem kann bevorzugt sein, daß die Wandstärke des Halters kleiner als 2 mm ist.

Auch kann bevorzugt sein, daß die Länge der Handhabungsbereiche ein Mehrfaches der Rinnenbreite des Halters beträgt, insbesondere das Dreifache.

Zudem ist bevorzugt, daß die Höhe der Handhabungsbereiche gleich der Rinnenlänge des Halters ist.

Eine alternative Lösung der eingangs gestellten Aufgabe, die auch in Kombination mit der vorbeschriebenen Lösung anwendbar ist, wird darin gesehen, daß jedes Verbindungselement aus einem rinnenartigen, im Querschnitt etwa U-förmigen, im wesentlichen formstabilen Halter besteht, dessen Schenkelabstand dem Drahtdurchmesser angepaßt ist, so daß die beiden aneinanderliegenden Querstäbe der gestoßenen Gitterbahnabschnitte zwischen die Schenkel passend einfügbar sind, daß an die freien Schenkelenden des rinnenartigen Halters Handhabungsbereiche anschließen, die durch quer zum Rinnenspalt etwa parallel zur Basis verlaufende, voneinander weg in Flucht zueinander gerichtete Teile (Flügel) des Halters gebildet sind, daß die Höhe der Handhabungsbereiche gleich dem Abstand der an die Querstäbe angeschlossenen benachbarten Längsstäbe voneinander ist oder gering kleiner als der Abstand ist und daß die Handhabungsbereiche insbesondere die parallel zu den Längsstäben verlaufenden Randkanten der Handhabungsbereiche in der Sollposition, in der der Halter mit seiner Rinne auf die Querstäbe an der Stoßstelle aufgesteckt ist und die Handhabungsbereiche in der von den Stäben aufgespannten Ebene liegen, hinter den benachbarten Längsstäben verhakbar bzw. an die Längsstäbe anlegbar sind.

Bei dieser Ausbildung kann anstelle der Ausformungen oder auch zusätzlich zu den Ausformungen eine Anordnung vorgesehen sein, mittels derer die Handhabungsbereiche in der Montagesollage, in der also die Querstababschnitte der Stoßstelle in der entsprechenden Rinnenform des Halters sitzen, eine Verriegelung der Sollposition erfolgen, in dem das Gesamtelement an den Handhabungsbereichen ergriffen wird und um die Achse gedreht wird, die durch die Querstäbe gebildet ist. Hierdurch werden die Verhakungsvorsprünge oder Kanten der Handhabungsbereiche, die vornehmlich an den parallel zu den Längsstäben verlaufenden Randkanten der Handhabungsbereiche angeordnet sind, hinter die Längsstäbe gedrängt. Diese Verhakungsbereiche überlaufen also quasi die Längsstäbe und greifen in Sollposition verriegelnd hinter diese, so daß das Zurückdrehen des gesamten Elementes in die Demontagelage nur unter Überwindung der Verhakung möglich ist.

Eine bevorzugte Weiterbildung hierzu besteht darin, daß an den etwa parallel zu den Längsstäben verlaufenden Randkanten der Handhabungsbereiche Vorsprünge ausgebildet sind, die in der Sollposition verriegelnd hinter die Längsstäbe greifen oder an diesen angreifen.

Desweiteren kann vorgesehen sein, daß die Randkanten der Handhabungsbereiche von der Rinnenform des Halters zu den freien Enden der Handhabungsbereiche divergieren, wobei durch das Ende des Divergenzbereiches die Verhakungsmittel gebildet sind. Zudem kann vorgesehen sein, daß die Divergenzbereiche geringfügig gegenüber der Ebene, die von den Handhabungsbereichen aufgespannt ist, stumpfwinklig abgewinkelt sind, so daß sie in Montage-Sollposition zum Inneren der Gitterkabelbahn abragen.

Auch kann vorgesehen sein, daß die Verhakungsmittel als von den Randkanten der Handhabungsbereiche nahe deren freiem Ende abragende Vorsprünge ausgebildet sind, die gegebenenfalls durch angeformte und/oder stumpfwinklig abgewinkelte Lappen gebildet sind.

Die Erfindung betrifft weiter eine Anordnung zur schraubenlosen Verbindung von Gitterkabelbahnen, die aus in Reihe verlegten Gitterbahnabschnitten bestehen, deren einander zugewandte Enden unter Einhaltung eines Abstandsspaltes mittels Verbindungselementen verbindbar beziehungsweise verbunden sind, wobei die Gitterbahnabschnitte aus Längsstäben und etwa U-förmig geformten, voneinander in Längsrichtung beabstandeten Querstäben zusammengesetzt sind.

Während gemäß Anspruch 1 bis Anspruch 17 von einer abstandslosen gestoßenen Anordnung der Gitterkabelbahnelemente ausgegangen wird, geht die nachstehende Erfindung von einem Stand der Technik aus, bei dem die Gitterbahnabschnitte unter Einhaltung eines Abstandsspaltes miteinander verbunden werden. Es hat sich gezeigt, daß eine gestoßene Anordnung der Gitterbahnabschnitte insofern problematisch sein kann, als geringfügige Überstände der Längsstäbe der Gitterkabelbahnen und/oder Verzinkungsschichten im Stoßbereich dazu führen können, daß die Verbindungsanordnung gemäß Anspruch 1 bis 17 schwierig oder nur umständlich aufgebracht werden kann.

Demzufolge liegt der Erfindung die Aufgabe zugrunde, eine Anordnung gattungsgemäßer Art zu schaffen, bei der Verbindungselemente zur Anwendung kommen können, die mit geringem Materialeinsatz zu fertigen sind, die einfach zu handhaben sind, die sowohl im Schenkelbereich der Gitterkabelbahnabschnitte als auch im Bodenbereich derselben eingesetzt werden können und die eine Befestigung der Gitterbahnabschnitte unter Einhaltung eines Abstandsspaltes aneinander ermöglichen.

Zur Lösung dieser Aufgabe schlägt die Erfindung vor, daß jedes Verbindungselement aus einem rinnenartigen, im Querschnitt etwa U-förmigen im wesentlichen formstabilen Halter besteht, dessen Schenkelabstand dem Abstandsspalt zuzüglich des Drahtdurchmessers angepaßt ist, so daß die beiden benachbarten Querstäbe der voneinander beabstandeten Gitterbahnabschnitte zwischen die Schenkel passend einfügbar sind, wobei an den der Basis fern liegenden Bereichen der Schenkel den von den Schenkeln gebildeten Spalt geringfügig einengende Ausformungen ausgebildet sind, die in der Verbindungssollage an den im Spalt befindlichen, an der Basis anliegenden Stabbereichen der Querstäbe auf der der Basis abgewandten Seite anliegen, und daß an der Basis mindestens einseitig oder beidseitig an den schenkelfreien Bereichen eine Biegelasche angeformt ist, die gleichgerichtet zu den Schenkeln abbiegbar zwischen die Querstäbe einschwenkbar ist und sich an den Querstäben jeweils auf der den Schenkeln abgewandten Seite abstützt.

Unter Beibehalt der Vorteile, die zu den Ansprüchen 1 bis 17 beschrieben sind, ist es gemäß der weiteren Erfindung möglich, auch Gitterbahnabschnitte unter Bildung eines Abstandsspaltes miteinander in einfacher Weise zu verbinden, wobei nach der Anordnung der Halter die Biegelaschen in den zwischen den Querstäben gebildeten Abstandsspalt eingeschwenkt werden, so daß eine zumindest formschlüssige Verbindung zwischen den Elementen erreicht ist.

Bevorzugte Weiterbildungen der Erfindung sind in den Unteransprüchen und im Nebenanspruch angegeben.

Bei der Anordnung gemäß Anspruch 30 ist ebenfalls das letzte Teilmerkmal des Anspruches 18 erforderlich, um den Abstandsspalt einzuhalten und dennoch eine sichere Verbindung der Elemente aneinander zu erreichen.

Ausführungsbeispiele der Erfindung sind in der Zeichnung dargestellt und im folgenden näher beschrieben. Es zeigt:
- Figur 1: eine erfindungsgemäße Anordnung in einer Vormontagesollage;
- Figur 2: desgleichen in Sollmontagelage;

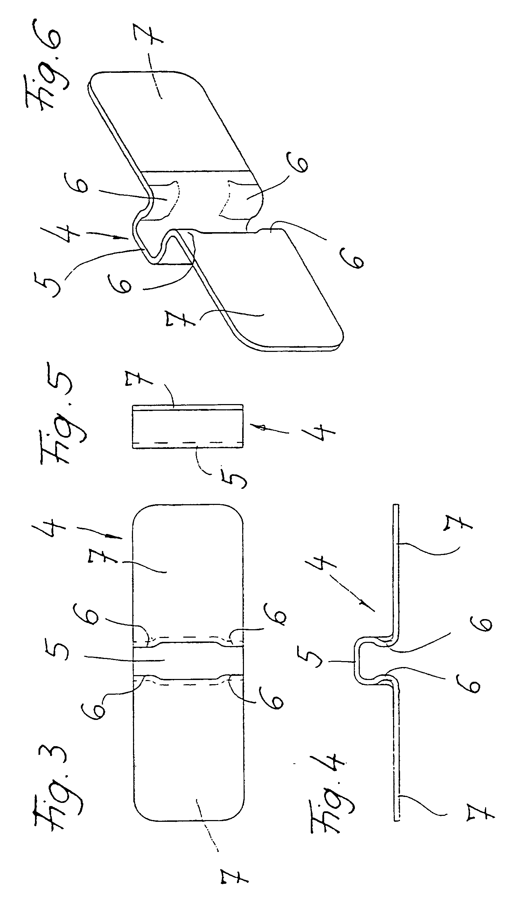

- Figur 3 bis 6: eine Einzelheit in Ansicht, Draufsicht, Seitenansicht und in symmetrischer Darstellung;
- Figur 7: eine weitere Variante in Ansicht;
- Figur 8: desgleichen in Stirnansicht;
- Figur 9 und 10: eine weitere Variante in der Ansicht gemäß Figur 7 und 8;
- Figur 11 und 12: eine weitere Variante in der Ansicht gemäß Figur 7 und 8;
- Figur 13: eine erfindungsgemäße Anordnung in Ansicht;
- Figur 14: eine Einzelheit von oben gesehen;
- Figur 15: die Einzelheit in Ansicht.

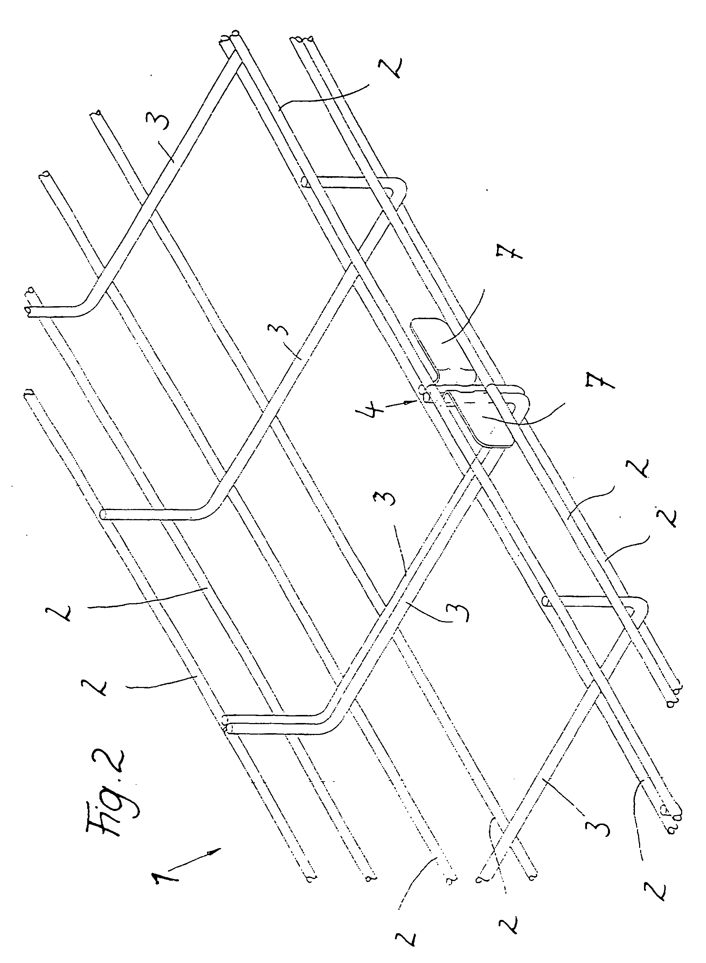

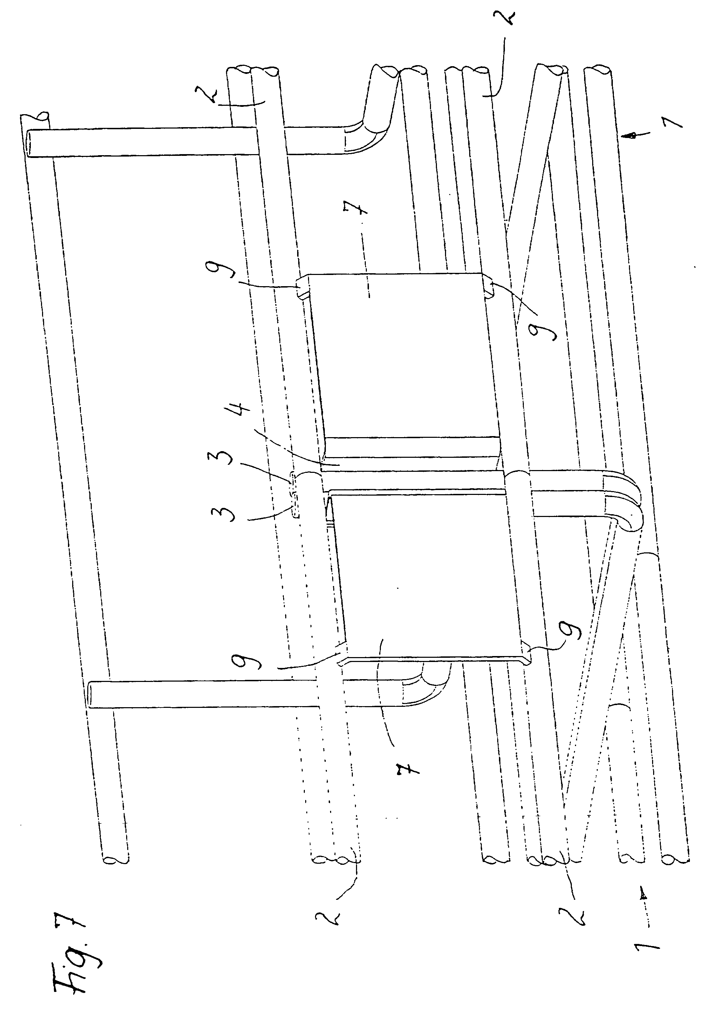

In der Zeichnung ist eine Anordnung zur schraubenlosen Verbindung von Gitterkabelbahnen gezeigt, die aus in Reihe verlegten Gitterbahnabschnitten 1 bestehen. Deren-einander zugewandten Enden sind spaltfrei gestoßen und mittels Verbindungselementen verbunden. Die Gitterbahnabschnitte bestehen aus Längsstäben 2 und etwa U-förmig geformten, voneinander in Längsrichtung beabstandeten Querstäben 3. Jedes Verbindungselement besteht aus einem rinnenartigen, im Querschnitt etwa U-förmigen, im wesentlichen formstabilen Halter 4, dessen Schenkelabstand dem Drahtdurchmesser der Querstäbe angepaßt ist, so daß die beiden aneinander liegenden Querstäbe 3 der gestoßenen Gitterbahnabschnitte 1 zwischen die Schenkel des Halters 4 passend einfügbar sind. Dabei sind an den der Basis 5 fernliegenden Bereichen der Schenkel den von den Schenkeln gebildeten Spalt geringfügig einengende Ausformungen 6 ausgebildet, die in der Verbindungslage, wie sie in Figur 2 gezeigt ist, an den im Spalt befindlichen, an der Basis 5 anliegenden Stabbereiche der Querstäbe 3 auf der der Basis 5 abgewandten Seite anliegen. Die einengenden Ausformungen 6 sind an den Enden der vom Halter 4 geformten Rinne jeweils beidseits und beidends der Rinnenform ausgebildet, wie insbesondere aus Figur 3 und Figur 6 ersichtlich ist. Die Länge der vom Halter 4 geformten Rinne ist nur wenig kleiner als der Abstand der an die Querstäbe 3 angeschlossenen benachbarten Längsstäbe 2, so daß in der Montagesollage ein Sitz des Halters 4 auf den Querstäben 3 erreicht ist, der eine Verschiebung entlang der Querstäbe 3 im Prinzip ausschließt, da dieser Weg durch die Längsstäbe 2 versperrt ist.

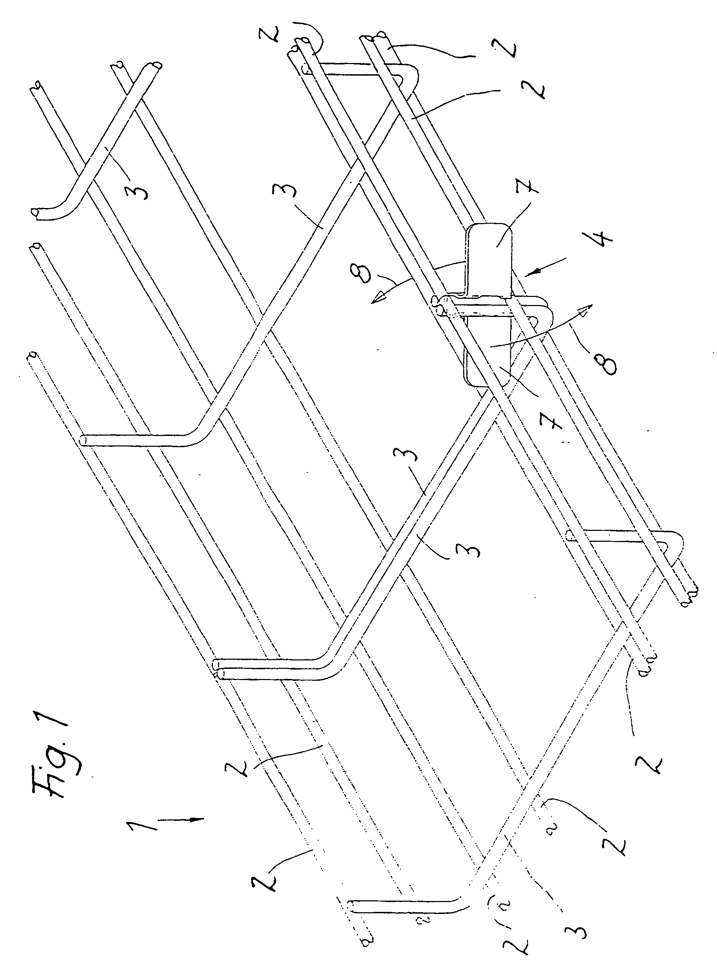

Die Halter 4 können, wie in Figur 1 und 2 gezeigt ist, an den Schenkeln oder auch, was in der Zeichnung nicht dargestellt ist, an der Basis der gestoßenen Gitterbahnabschnitte 1 angeordnet werden.

Die einengenden Ausformungen 6 ragen vorzugsweise jeweils um etwa die Materialstärke der Schenkel oder auch um weniger gegenüber den Schenkeln des Halters 4 zueinanander gerichtet vor. An die der Basis 5 des Halters 4 abgewandten Enden der Schenkel schließen Handhabungsbereiche 7 an, die durch quer zum Rinnenspalt etwa parallel zur Basis 5 verlaufende, voneinander weg und in Flucht zueinander gerichtete Teile des Halters 4 gebildet sind. Die einengenden Ausformungen 6 gehen von den Schenkeln in die Handhabungsbereiche 7 geringfügig über. Wie insbesondere anhand der Figur 1 verdeutlicht, kann der Halter 4 mit seiner zwischen den Schenkeln befindliche Rinne auf einen Querstab 3 an der Stoßstelle der Gitterbahnabschnitte 1 aufgesteckt werden und um den Querstab als Drehachse in die den anderen Querstab 3 der Stoßstelle mit erfassende Sollposition gedreht werden, wie anhand der Bewegungspfeile 8 in Figur 1 verdeutlicht ist. In der Ausgangsposition, die in Figur 1 gezeigt ist, bildet dabei die Basis 5 des Halters 4 und die an dem einen Schenkel befindlichen Ausformungen 6 ein Drehlager bezüglich des in der Zeichnung dargestellten rechten Querstabes 3, so daß der Halter 4 um diesen Querstab in die Sollposition gedreht werden kann, bis die Sollposition erreicht ist und auch die Einengungen 6 am anderen Schenkel über den zweiten Querstab 3 greifen, so daß die Arretierungslage erreicht ist.

Vorzugsweise ist der Halter ein Stahlblechformteil, wobei die Wandstärke des Halters vorzugsweise kleiner als 2 mm ist. Die Länge der Handhabungsbereiche 7 beträgt ein Mehrfaches der Rinnenbreite des Halters 4, vorzugsweise das Dreifache. Die Höhe der Handhabungsbereiche 7 ist gleich der Rinnenlänge des Halters 4. Insgesamt ist so ein Teil erzeugt, welches im Querschnitt etwa omegaförmig geformt ist.

In den Figuren 7 bis 12 sind weitere erfindungsgemäße Lösungen dargestellt. Auch hierbei handelt es sich um eine Anordnung zur schraubenlosen Verbindung von Gitterkabelbahnen, die aus in Reihe verlegten Gitterabschnitten 1 bestehen. Deren einander zugewandte Enden sind gestoßen und mittels Verbindungselementen verbindbar. Die Gitterbahnabschnitte bestehen ebenfalls aus Längsstäben 2 und U-förmig geformten voneinander in Längsrichtung beabstandeten Querstäben 3. Auch die Längsstäbe weisen selbstverständlich Abstand voneinander auf. Beispielsweise sind die Seitenflächen der Gitterkabelbahnen durch jeweils 2 Längsstäbe gebildet, während die Bodenfläche der Gitterkabelbahnen beispielsweise durch 4 Längsstäbe gebildet sein können.

Bei diesen Lösungsvorschlägen kann anstelle der Ausformungen 6 eine andere Art der Fixierung vorgesehen sein. Es ist aber auch möglich, diese Ausführungsform mit den Ausformungen 6 zu kombinieren.

Bei diesen Ausführungsformen besteht jedes Verbindungselement aus einem rinnenartigen im Querschnitt etwa U-förmigen, im wesentlichen formstabilen Halter 4, dessen Schenkelabstand dem Drahtdurchmesser angepaßt ist, so daß die beiden aneinanderliegenden Querstäbe 3 der gestoßenen Gitterbahnabschnitte 1 zwischen die Schenkel passend einfügbar sind. An die freien Schenkelenden des rinnenartigen Halters 4 schließen Handhabungsbereiche 7 an, die durch quer zum Rinnenspalt etwa parallel zur Basis des Halters 4 verlaufende, voneinander weg in Flucht zueinander gerichtete Teile oder Flügel des Haltes 4 gebildet sind. Die Höhe der Handhabungsbereiche 7 entspricht dem Abstand der an die Querstäbe 3 angeschlossenen benachbarten Längsstäbe 2, oder die Höhe ist gering kleiner als dieser Abstand. Die Handhabungsbereiche 7, insbesondere die etwa parallel zu den Längsstäben 2 verlaufenden Randkanten der Handhabungsbereiche 7, sind in der Sollposition, in der der Halter 4 mit seiner Rinne auf die Querstäbe 3 an der Stoßstelle aufgesteckt ist (wie das in der Zeichnung dargestellt ist) und die Handhabungsbereiche 7 in der von den Stäben 2 beziehungsweise 3 aufgespannten Ebene liegen, hinter den benachbarten Längsstäben 2 (oben und unten bzw. rechts und links) verhakbar. Es ist nicht unbedingt erforderlich, daß die Verhakung an vier Stellen erreicht wird, wie das in der Zeichnung gezeigt ist, sondern es würde im Extremfall eine Verhakung an dem einen Handhabungsbereich 7 ausreichen, während an dem anderen Handhabungsbereich 7 dann ein entsprechender Anschlag als korrespondierendes Verhakungsmittel ausgebildet ist.

Die Montage dieser Halter 4 erfolgt in ähnlicher Weise, wie das anhand der Figur 1 verdeutlicht ist. Der Halter kann mit der Rinne zunächst auf einen Querstab 3 in Schräglage, wie in Figur 1 veranschaulicht, aufgesteckt werden und dann um diesen Querstab in die Sollage gemäß Figur 7, 9, 11 verdreht werden entsprechend den Bewegungspfeilen 8 in Figur 1. Dabei werden dann die an dem einen Handhabungsteil 7 befindlichen Verhakungsmittel durch den von den Längsstäben 2 gebildeten Spalt gedrängt, wobei die Querstäbe 2 voneinander geringfügig weggedrängt werden, so daß die Verhakungsmittel durchgreifen können. Die am anderen Handhabungsbereich 7 befindlichen Verhakungselemente legen sich in der Sollposition an die Längsstäbe 2 an und hierzu sind vorzugsweise die Handhabungsbereiche, die unter den Längsstäben durchgleiten müssen, abgeschrägt, so daß eine Aufgleithilfe gebildet ist, während die andere Randkante der Verhakungsmittel oder dergleichen scharfkantig ist, so daß in der Sollposition, wie sie in Figur 7 beispielsweise gezeigt ist, die Verbindung nicht oder nur schwer lösbar ist.

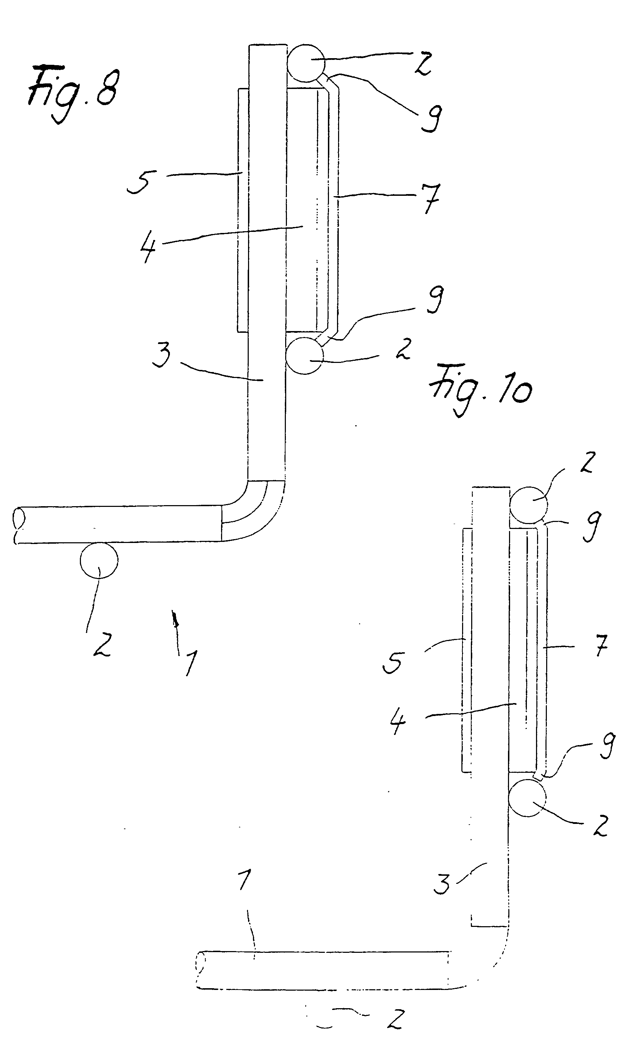

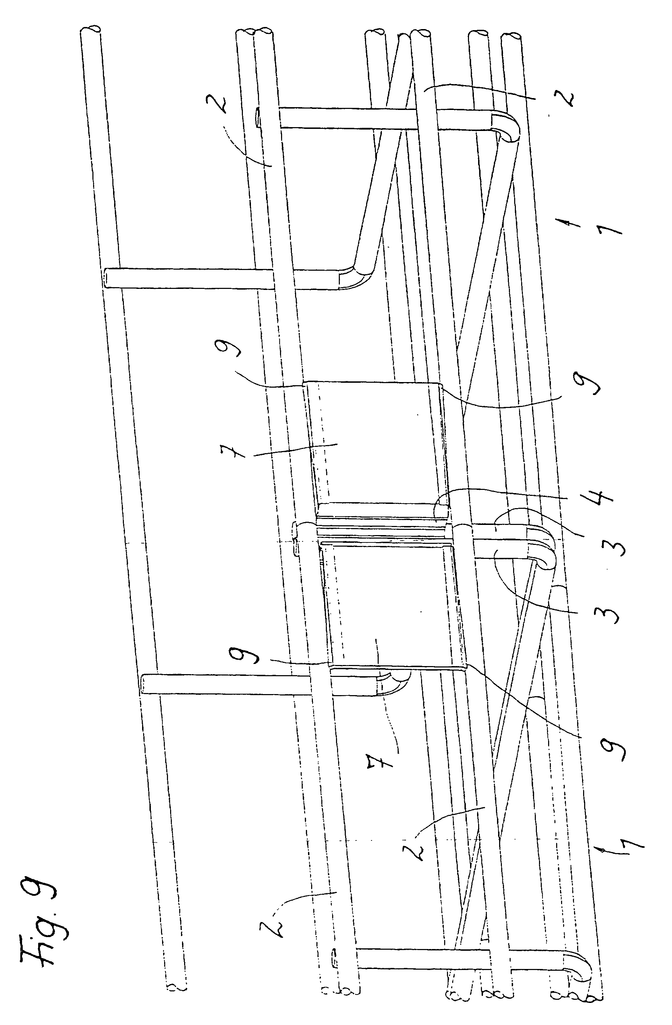

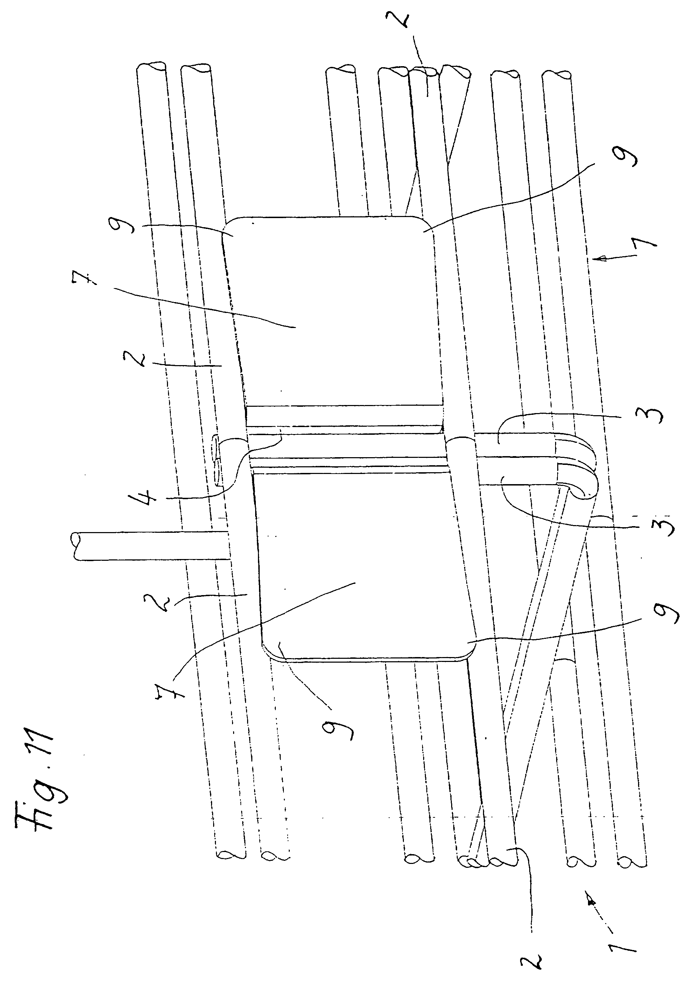

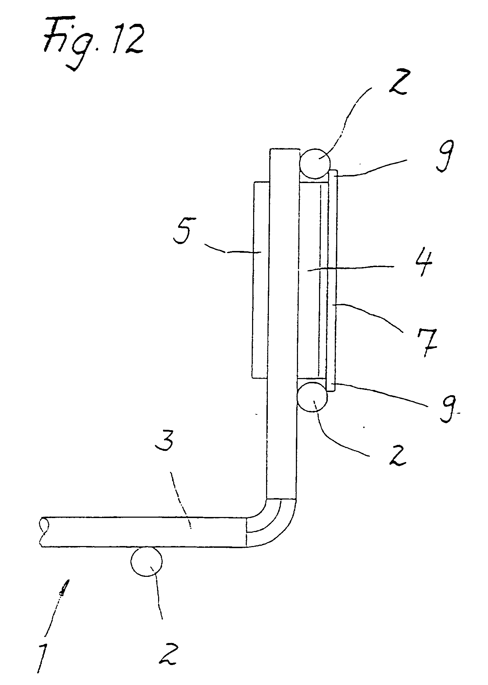

Bei den dargestellten Ausführungsformen ist an den etwa parallel zu den Längsstäben 2 verlaufenden Randkanten der Handhabungsbereiche 7 die Anordnung von Vorsprüngen 9 vorgesehen, die in Sollposition verriegelnd hinter die Längsstäbe 2 greifen oder an diesen verriegelnd angreifen. Bei der Ausführungsform nach Figur 9 bis 12 divergieren die Randkanten der Handhabungsbereiche von der Rinnenform des Halters 4 zu ihren freien Enden hin, wobei durch das Ende des Divergenzbereiches die Verhakungsmittel (9) gebildet sind. Während bei der Ausführungsform nach Figur 11 und 12 die Handhabungsbereiche flächig ohne Abwinklungen gestaltet sind, ist bei der Ausführungsform nach Figur 9 und 10 die Anordnung so getroffen, daß die Divergenzbereiche, die die Verhakungsmittel 9 bilden, gegenüber der Ebene, die von den Handhabungsbereichen 7 aufgespannt ist, stumpfwinklig abgewinkelt sind, so daß sie in Montagesollposition zum Inneren der Gitterkabelbahn abragen und quasi radial sich an den Längsstäben 2 abstützen. Bei der Ausführungsform nach Figur 7 und 8 sind die Verhakungsmittel 9 als von den Randkanten der Handhabungsbereiche 7 nahe deren Enden abragende Vorsprünge ausgebildet, die angeformte, stumpfwinklig abgewinkelte Lappen sind. Auch dabei ist die Abwinklung so getroffen, daß in der Montagesollage die Schnittkante der Lappen sich etwa radial am Umfang der Längsstäbe 2 abstützt.

Die Erfindung schafft eine äußerst einfache Möglichkeit der Anordnung der schraubenlosen Verbindung von Gitterkabelbahnen, wobei insbesondere eine spaltfreie Stoßanordnung der Gitterkabelbahnen im Bereich von Querstäben am Ende der Gitterkabelbahnabschnitte 1 ermöglicht ist.

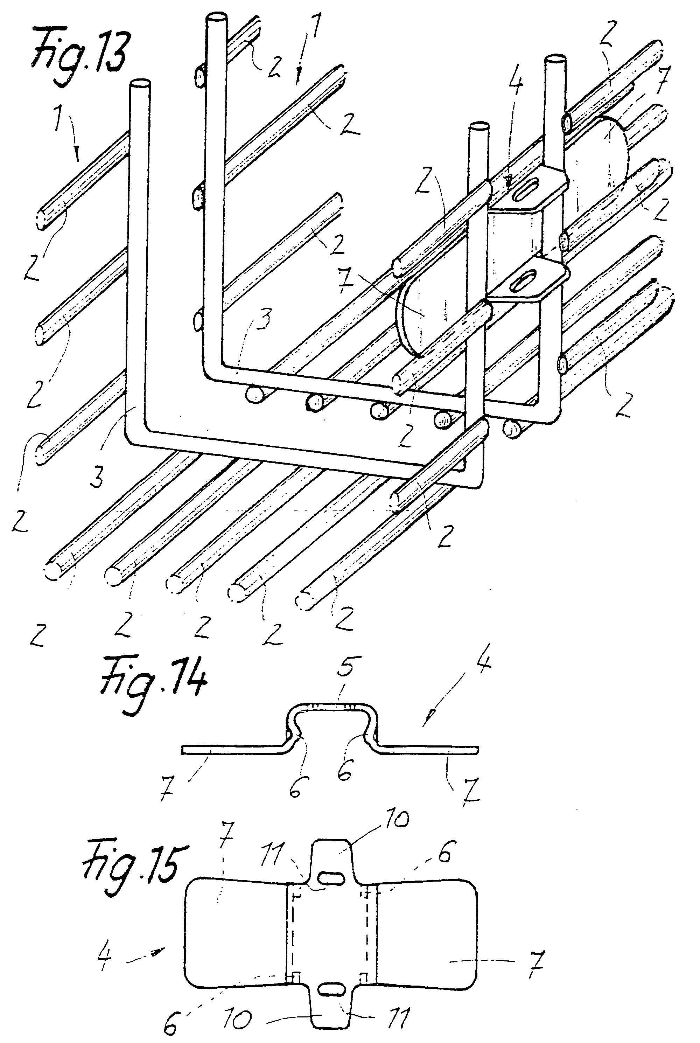

In der Zeichnung gemäß Figur 13 bis 15 ist eine Anordnung zur schraubenlosen Verbindung von Gitterkabelbahnen gezeigt, die aus in Reihe verlegten Gitterbahnabschnitten 1 bestehen. Deren einander zugewandte Enden sind unter Bildung eines Abstandsspaltes mittels Verbindungselementen verbunden. Die Gitterbahnabschnitte bestehen aus Längsstäben 2 und etwa U-förmig geformten, voneinander in Längsrichtung beabstandeten Querstäben 3. An der Verbindungsstelle können die Längsstäbe 2 mit den Querstäben 3 enden oder aber die Längsstäbe 2 können auch geringfügig über die Querstäbe 3 vorragen.

Jedes Verbindungselement besteht aus einem rinnenartigen, im Querschnitt etwa U-förmigen, im wesentlichen formstabilen Halter 4, dessen Schenkelabstand dem Drahtdurchmesser zuzüglich des Abstandsspaltmaßes angepaßt ist. Auf diese Weise sind die beiden an der Verbindungsstelle nebeneinander liegenden Querstäbe 3 der Gitterabschnitte 1 unter Einhalt des Abstandsspaltes zwischen die Schenkel des Halters 4 passend einfügbar. Dabei sind an den der Basis 5 fernliegenden Bereichen der Schenkel den von den Schenkeln gebildeten Spalt geringfügig einengende Ausformungen 6 ausgebildet, die in der Verbindungslage an den im Spalt befindlichen, an der Basis 5 anliegenden Stabbereichen der Querstäbe 3 auf der der Basis 5 abgewandten Seite anliegen. Die einengenden Ausformungen 6 sind an den Enden der vom Halter 4 geformten Rinne jeweils beidseits und beidends der Rinnenform ausgebildet. Die Länge der vom Halter 4 geformten Rinne ist nur gering kleiner als der Abstand der an die Querstäbe 3 angeschlossenen benachbarten Längsstäbe 2, so daß in der Montagesollage ein Sitz des Halters 4 auf den Querstäben 3 erreicht ist, der eine Verschiebung entlang der Querstäbe 3 im Prinzip ausschließt, da dieser Weg durch die Längsstäbe 2 versperrt ist. Die Halter 4 können an den Schenkeln oder auch an der Basis der mit Abstand angeordneten Gitterbahnabschnitte 1 angeordnet werden.

Die einengenden Ausformungen 6 ragen vorzugsweise jeweils um etwa die Materialstärke der Schenkel oder auch um weniger gegenüber den Schenkeln des Halters 4 zueinander gerichtet vor. An die der Basis des Halters 4 abgewandten Enden der Schenkel schließen Handhabungsbereiche 7 an, die durch quer zum Rinnenspalt etwa parallel zur Basis 5 verlaufende, voneinander weg und in Flucht zueinander gerichtete Teile des Halters gebildet sind. Der Halter 4 kann mit seiner zwischen den Schenkeln befindlichen Rinne auf einen Querstab 3 an der Stoßstelle der Gitterbahnabschnitte 1 aufgesteckt werden und um den Querstab als Drehachse in die den anderen Querstab 3 samt Abstandsmaß erfassende Sollposition gedreht werden. Wenn die Sollposition erreicht ist, greifen auch die Einengungen 6 am anderen Schenkel über den anderen Querstab 3, so daß eine Vorarretierungslage erreicht ist. Zur endgültigen Arretierung wird die an der Basis 5 beidseitig vorgesehene Biegelasche 10 gleichgerichtet zu den Schenkeln des Halters umgebogen, so daß sie quasi orthogonal von der Basis 5 abragt. In dieser Lage stützen sich die Randkanten der Lasche 10 an den Querstäben 3 ab, so daß die Querstäbe zwischen den Ausformungen 6 und der Lasche 10 fixiert sind. Um den Biegevorgang zu erleichtern, weisen die Biegelaschen 10 Eingriffsschlitze 11 für ein Werkzeug, insbesondere für die Klinge eines Schlitzschraubendrehers auf, so daß die Biegelaschen 10 leicht umgebogen werden können. Vorzugsweise weisen die Biegelaschen 10 eine Länge auf, die etwa der Rinnentiefe der Halter 4 entspricht.

## Patentansprüche

1. Anordnung zur schraubenlosen Verbindung von Gitterkabelbahnen, die aus in Reihe verlegten Gitterbahnabschnitten (1) bestehen, deren einander zugewandte Enden gestoßen und mittels Verbindungselementen verbindbar beziehungsweise verbunden sind, wobei die Gitterbahnabschnitte (1) aus Längsstäben (2) und etwa U-förmig geformten, voneinander in Längsrichtung beabstandeten Querstäben (3) zusammengesetzt sind, **dadurch gekennzeichnet, daß** jedes Verbindungselement aus einem rinnenartigen, im Querschnitt etwa U-förmigen im wesentlichen formstabilen Halter (4) besteht, dessen Schenkelabstand dem Drahtdurchmesser angepaßt ist, so daß die beiden aneinander liegenden Querstäbe (3) der gestoßenen Gitterbahnabschnitte (1) zwischen die Schenkel passend einfügbar sind, wobei an den der Basis (5) fern liegenden Bereichen der Schenkel den von den Schenkeln gebildeten Spalt geringfügig einengende Ausformungen (6) ausgebildet sind, die in der Verbindungssollage an den im Spalt befindlichen, an der Basis (5) anliegenden Stabbereichen der Querstäbe (3) auf der der Basis (5) abgewandten Seite anliegen.

2. Anordnung nach Anspruch 1, **dadurch gekennzeichnet, daß** die einengenden Ausformungen (6) an den Enden der vom Halter (4) geformten Rinne jeweils beidseits und beidenends der Rinnenform ausgebildet sind.

3. Anordnung nach Anspruch 1 oder 2, **dadurch gekennzeichnet, daß** die Länge der vom Halter (4) geformten Rinne nur wenig kleiner als der Abstand der an die Querstäbe (3) angeschlossenen benachbarten Längsstäbe (2) voneinander ist.

4. Anordnung nach einem der Ansprüche 1 bis 3, **dadurch gekennzeichnet, daß** die Halter (4) an den Schenkeln und/oder an der Basis der gestoßenen Gitterbahnabschnitte (1) angeordnet sind.

5. Anordnung nach einem der Ansprüche 1 bis 4, **dadurch gekennzeichnet, daß** die einengenden Ausformungen (6) jeweils um die Schenkelmaterialstärke oder weniger gegenüber den Schenkeln des Halters (4) zueinander gerichtet vorragen.

6. Anordnung nach einem der Ansprüche 1 bis 5, **dadurch gekennzeichnet, daß** an die der Basis (5) des Halters (4) abgewandten Enden der Schenkel Handhabungsbereiche (7) anschließen, die durch quer zum Rinnenspalt etwa parallel zur Basis (5) verlaufende, voneinander weg und in Flucht zueinander gerichtete Teile des Halters (4) gebildet sind.

7. Anordnung nach einem der Ansprüche 1 bis 6, **dadurch gekennzeichnet, daß** die einengenden Ausformungen (6) von den Schenkeln in die Handhabungsbereiche (7) übergehend geformt sind.

8. Anordnung nach einem der Ansprüche 1 bis 7, **dadurch gekennzeichnet, daß** der Halter (4) mit seiner zwischen den Schenkeln befindlichen Rinne auf einen der Querstäbe (3) an der Stoßstelle der Gitterbahnabschnitte (1) aufsteckbar und um den Querstab (3) als Drehachse in die den anderen Querstab (3) der Stoßstelle mit erfassende Sollposition drehbar ist.

9. Anordnung nach einem der Ansprüche 1 bis 8, **dadurch gekennzeichnet, daß** der Halter (14) ein Stahlblechformteil ist.

10. Anordnung nach Anspruch 9, **dadurch gekennzeichnet, daß** die Wandstärke des Halters (4) kleiner als 2 mm ist.

11. Anordnung nach einem der Ansprüche 6 bis 10, **dadurch gekennzeichnet, daß** die Länge der Handhabungsbereiche (7) ein Mehrfaches der Rinnenbreite des Halters beträgt, insbesondere das Dreifache.

12. Anordnung nach einem der Ansprüche 6 bis 11, **dadurch gekennzeichnet, daß** die Höhe der Handhabungsbereiche (7) gleich der Rinnenlänge des Halters (4) ist.

13. Anordnung nach dem Oberbegriff des Anspruches 1, insbesondere nach einem der Ansprüche 1 bis 12, **dadurch gekennzeichnet, daß** jedes Verbindungselement aus einem rinnenartigen, im Querschnitt etwa U-förmigen, im wesentlichen formstabilen Halter (4) besteht, dessen Schenkelabstand dem Drahtdurchmesser angepaßt ist, so daß die beiden aneinanderliegenden Querstäbe (3) der gestoßenen Gitterbahnabschnitte (1) zwischen die Schenkel passend einfügbar sind, daß an die freien Schenkelenden des rinnenartigen Halters (4) Handhabungsbereiche (7) anschließen, die durch quer zum Rinnenspalt etwa parallel zur Basis (5) verlaufende, voneinander weg in Flucht zueinander gerichtete Teile (Flügel) des Halters (4) gebildet sind, daß die Höhe der Handhabungsbereiche (7) gleich dem Abstand der an die Querstäbe (3) angeschlossenen benachbarten Längsstäbe voneinander ist oder gering kleiner als der Abstand ist und daß die Handhabungsbereiche (7), insbesondere die parallel zu den Längsstäben verlaufenden Randkanten der Handhabungsbereiche (7), in der Sollposition, in der der Halter (4) mit seiner Rinne auf die Querstäbe (3) an der Stoßstelle aufgesteckt ist und die Handhabungsbereiche (7) in der von den Stäben aufgespannten Ebene liegen, hinter den benachbarten Längsstäben (2) verhakbar bzw. an die Längsstäbe (2) anlegbar sind.

14. Anordnung nach Anspruch 13, **dadurch gekennzeichnet, daß** an den etwa parallel zu den Längsstäben verlaufenden Randkanten der Handhabungsbereiche (7) Vorsprünge (9) ausgebildet sind, die in der Sollposition verriegelnd hinter die Längsstäbe (2) greifen oder an diesen angreifen.

15. Anordnung nach Anspruch 13 oder 14, **dadurch gekennzeichnet, daß** die Randkanten der Handhabungsbereiche (7) von der Rinnenform des Halters (4) zu den freien Enden der Handhabungsbereiche (7) divergieren, wobei durch das Ende des Divergenzbereiches die Verhakungsmittel (9) gebildet sind.

16. Anordnung nach einem der Ansprüche 13 bis 15, **dadurch gekennzeichnet, daß** die Divergenzbereiche geringfügig gegenüber der Ebene, die von den Handhabungsbereichen (7) aufgespannt ist, stumpfwinklig abgewinkelt sind, so daß sie in Montage-Sollposition zum Inneren der Gitterkabelbahn abragen.

17. Anordnung nach einem der Ansprüche 13 bis 16, **dadurch gekennzeichnet, daß** die Verhakungsmittel (9) als von den Randkanten der Handhabungsbereiche (7) nahe deren freiem Ende abragende Vorsprünge ausgebildet sind, die gegebenenfalls durch angeformte und/oder stumpfwinklig abgewinkelte Lappen gebildet sind.

18. Anordnung zur schraubenlosen Verbindung von Gitterkabelbahnen, die aus in Reihe verlegten Gitterbahnabschnitten (1) bestehen, deren einander zugewandte Enden unter Einhaltung eines Abstandsspaltes mittels Verbindungselementen verbindbar beziehungsweise verbunden sind, wobei die Gitterbahnabschnitte (1) aus Längsstäben (2) und etwa U-förmig geformten, voneinander in Längsrichtung beabstandeten Querstäben (3) zusammengesetzt sind, **dadurch gekennzeichnet, daß** jedes Verbindungselement aus einem rinnenartigen, im Querschnitt etwa U-förmigen im wesentlichen formstabilen Halter (4) besteht, dessen Schenkelabstand dem Abstandsspalt zuzüglich des Drahtdurchmessers angepaßt ist, so daß die beiden benachbarten Querstäbe (3) der voneinander beabstandeten Gitterbahnabschnitte (1) zwischen die Schenkel passend einfügbar sind, wobei vorzugsweise an den der Basis (5) fern liegenden Bereichen der Schenkel den von den Schenkeln gebildeten Spalt geringfügig einengende Ausformungen (6) ausgebildet sind, die in der Verbindungssollage an den im Spalt befindlichen, an der Basis (5) anliegenden Stabbereichen der Querstäbe (3) auf der der Basis (5) abgewandten Seite anliegen, und daß an der Basis (5) mindestens einseitig oder beidseitig an den schenkelfreien Bereichen eine Biegelasche (10) angeformt ist, die gleichgerichtet zu den Schenkeln abbiegbar zwischen die Querstäbe (3) einschwenkbar ist und sich vorzugsweise an den Querstäben (3) jeweils auf der den Schenkeln abgewandten Seite abstützt.

19. Anordnung nach Anspruch 18, **dadurch gekennzeichnet, daß** die einengenden Ausformungen (6) an den Enden der vom Halter (4) geformten Rinne jeweils beidseits und beidenends der Rinnenform ausgebildet sind.

20. Anordnung nach Anspruch 18 oder 19, **dadurch gekennzeichnet, daß** die Länge der vom Halter (4) geformten Rinne nur wenig kleiner als der Abstand der an die Querstäbe (3) angeschlossenen benachbarten Längsstäbe (2) voneinander ist.

21. Anordnung nach einem der Ansprüche 18 bis 20, **dadurch gekennzeichnet, daß** die Halter (4) an den Schenkeln und/oder an der Basis der Gitterbahnabschnitte (1) angeordnet sind.

22. Anordnung nach einem der Ansprüche 18 bis 21, **dadurch gekennzeichnet, daß** die einengenden Ausformungen (6) jeweils um die Schenkelmaterialstärke oder weniger gegenüber den Schenkeln des Halters (4) zueinander gerichtet vorragen.

23. Anordnung nach einem der Ansprüche 18 bis 22, **dadurch gekennzeichnet, daß** an die der Basis (5) des Halters (4) abgewandten Enden der Schenkel Handhabungsbereiche (7) anschließen, die durch quer zum Rinnenspalt etwa parallel zur Basis (5) verlaufende, voneinander weg und in Flucht zueinander gerichtete Teile des Halters (4) gebildet sind.

24. Anordnung nach einem der Ansprüche 18 bis 23, **dadurch gekennzeichnet, daß** die einengenden Ausformungen (6) von den Schenkeln in die Handhabungsbereiche (7) übergehend geformt sind.

25. Anordnung nach einem der Ansprüche 18 bis 24, **dadurch gekennzeichnet, daß** der Halter (4) mit seiner zwischen den Schenkeln befindlichen Rinne auf einen der Querstäbe (3) an der Stoßstelle der Gitterbahnabschnitte (1) aufsteckbar und um den Querstab (3) in die den anderen Querstab (3) der Verbindungsstelle mit erfassende Sollposition drehbar ist.

26. Anordnung nach einem der Ansprüche 18 bis 25, **dadurch gekennzeichnet, daß** der Halter (14) ein Stahlblechformteil ist.

27. Anordnung nach Anspruch 26, **dadurch gekennzeichnet, daß** die Wandstärke des Halters (4) kleiner als 2 mm ist.

28. Anordnung nach einem der Ansprüche 23 bis 27, **dadurch gekennzeichnet, daß** die Länge der Handhabungsbereiche (7) ein Mehrfaches der Rinnenbreite des Halters beträgt, insbesondere das Dreifache.

29. Anordnung nach einem der Ansprüche 23 bis 28, **dadurch gekennzeichnet, daß** die Höhe der Handhabungsbereiche (7) gleich der Rinnenlänge des Halters (4) ist.

30. Anordnung nach dem Oberbegriff des Anspruches 18, insbesondere nach einem der Ansprüche 18 bis 29, **dadurch gekennzeichnet, daß** jedes Verbindungselement aus einem rinnenartigen, im Querschnitt etwa U-förmigen, im wesentlichen formstabilen Halter (4) besteht, dessen Schenkelabstand dem Abstandsspalt zuzüglich des Drahtdurchmessers angepaßt ist, so daß die beiden zu verbindenden Querstäbe (3) der Gitterbahnabschnitte (1) zwischen die Schenkel mit Abstandsspalt passend einfügbar sind, daß an die freien Schenkelenden des rinnenartigen Halters (4) Handhabungsbereiche (7) anschließen, die durch quer zum Rinnenspalt etwa parallel zur Basis (5) verlaufende, voneinander weg in Flucht zueinander gerichtete Teile (Flügel) des Halters (4) gebildet sind, daß die Höhe der Handhabungsbereiche (7) gleich dem Abstand der an die Querstäbe (3) angeschlossenen benachbarten Längsstäbe voneinander ist oder gering kleiner als der Abstand ist und daß die Handhabungsbereiche (7), insbesondere die parallel zu den Längsstäben verlaufenden Randkanten der Handhabungsbereiche (7), in der Sollposition, in der der Halter (4) mit seiner Rinne auf die Querstäbe (3) an der Verbindungsstelle aufgesteckt ist und die Handhabungsbereiche (7) in der von den Stäben aufgespannten Ebene liegen, hinter den benachbarten Längsstäben (2) verhakbar bzw. an die Längsstäbe (2) anlegbar sind.

31. Anordnung nach Anspruch 30, **dadurch gekennzeichnet, daß** an den etwa parallel zu den Längsstäben verlaufenden Randkanten der Handhabungsbereiche (7) Vorsprünge ausgebildet sind, die in der Sollposition verriegelnd hinter die Längsstäbe (2) greifen oder an diesen angreifen.

32. Anordnung nach Anspruch 30 oder 31, **dadurch gekennzeichnet, daß** die Randkanten der Handhabungsbereiche (7) von der Rinnenform des Halters (4) zu den freien Enden der Handhabungsbereiche (7) divergieren, wobei durch das Ende des Divergenzbereiches die Verhakungsmittel gebildet sind.

33. Anordnung nach einem der Ansprüche 30 bis 32, **dadurch gekennzeichnet, daß** die Divergenzbereiche geringfügig gegenüber der Ebene, die von den Handhabungsbereichen (7) aufgespannt ist, stumpfwinklig abgewinkelt sind, so daß sie in Montage-Sollposition zum Inneren der Gitterkabelbahn abragen.

34. Anordnung nach einem der Ansprüche 30 bis 33, **dadurch gekennzeichnet, daß** die Verhakungsmittel als von den Randkanten der Handhabungsbereiche (7) nahe deren freiem Ende abragende Vorsprünge ausgebildet sind, die gegebenenfalls durch angeformte und/oder stumpfwinklig abgewinkelte Lappen gebildet sind.

35. Anordnung nach einem der Ansprüche 18 bis 34, **dadurch gekennzeichnet, daß** die Biegelaschen (10) eine Länge aufweisen, die etwa der Rinnentiefe der Halter (4) entspricht.

36. Anordnung nach einem der Ansprüche 18 bis 35, **dadurch gekennzeichnet, daß** die Biegelaschen (10) Eingriffsschlitze (11) für ein Werkzeug, insbesondere für die Klinge eines Schlitzschraubenschrehers, aufweisen.

## Claims

1. An arrangement for the screwless connection of lattice cableways, which consist of lattice cableway portions (1) laid in series, the facing ends of which are adjacent and can be connected or are connected by means of connection elements, the lattice cableway portions (1) being composed of longitudinal webs (2) and roughly U-shaped transverse webs (4) spaced apart in the longitudinal direction,
**characterised in that** each connection element consists of a channel-shaped, substantially dimensionally stable holder(4) having a roughly U-shaped cross section, the leg spacing of which is adapted to the wire diameter, so that the two contiguous transverse webs (3) of the adjacent lattice cableway portions can be inserted to fit between the legs, wherein constructed at the regions of the legs lying far from the base (5) are shapings (6), which slightly narrow the gap formed by the legs and in the set connection position are adjacent to the web regions of the transverse webs (3) that are situated in the gap and are adjacent to the base (5) on the side further from the base (5).

2. An arrangement according to Claim 1,
**characterised in that** the narrowing shapings (6) at the ends of the channel formed by the holder (4) are in each case constructed on either side and at both ends of the channel shape.

3. An arrangement according to Claim 1 or 2,
**characterised in tha**t the length of the channel formed by the holder (4) is only slightly less than the distance between the adjacent longitudinal webs (2) connected to the transverse webs (3).

4. An arrangement according to one of Claims 1 to 3,
**characterised in that** the holders (4) are disposed at the legs and/or at the base of the contiguous lattice cableway portions (1).

5. An arrangement according to one of Claims 1 to 4,
**characterised in that** the narrowing shapings (6) in each case project, directed towards one another, by the thickness of the leg material or less in relation to the legs of the holder (4).

6. An arrangement according to one of Claims 1 to 5,
**characterised in that** connected to the ends of the legs further from the base (5) of the holder (4) are handling regions (7), which are formed by parts of the holder (4) that run transversely to the channel gap and roughly parallel to the base (5), and are directed away from one another and aligned with one another.

7. An arrangement according to one of Claims 1 to 6,
**characterised in that** the narrowing shapings (6) are formed passing from the legs into the handling regions (7).

8. An arrangement according to one of Claims 1 to 7,
**characterised in that** the holder (4) can be placed by its channel situated between the legs onto one of the transverse webs (3) at the point of impact of the lattice cableway portions (1) and can be rotated around the transverse web (3) as the axis of rotation into the set position also covering the other transverse web of the point of impact.

9. An arrangement according to one of Claims 1 to 8,
**characterised in that** the holder (14) is a sheet steel shaped part.

10. An arrangement according to Claim 9,
**characterised in that** the wall thickness of the holder (4) is less than 2 mm.

11. An arrangement according to one of Claims 6 to 10,
**characterised in that** the length of the handling regions (7) is a multiple of the channel width of the holder, in particular triple.

12. An arrangement according to one of Claims 6 to 11,
**characterised in that** the height of the handling regions (7) is equal to the channel length of the holder (4).

13. An arrangement according to the precharacterising clause of Claim 1, in particular according to one of Claims 1 to 12,
**characterised in that** each connecting element consists of a channel-shaped, substantially dimensionally stable holder (4) having a roughly U-shaped cross section, the leg spacing of which is adapted to the wire diameter, so that the two contiguous transverse webs (3) of the abutting lattice cableway portions (1) can be inserted to fit between the legs,
**in that** to the free legs ends of the channel-shaped holder (4) are connected handling regions (7), which are formed by parts (wings) of the holder (4) that run transversely to the channel gap and roughly parallel to the base (5) and are directed away from one another and in alignment with one another,
**in that** the height of the handling regions (7) is equal to the distance between the adjacent longitudinal webs connected to the transverse webs (3) or is slightly less than the distance,
and **in that** the handling regions (7), in particular the edges of the handling regions (7) running parallel to the longitudinal webs, in the set position in which the holder (4) is placed by its channel onto the transverse webs (3) at the point of impact and the handling regions (7) lie in the plane clamped by the webs, can be interlocked behind the adjacent longitudinal webs (2) and can be applied to the longitudinal webs (2).

14. An arrangement according to Claim 13,
**characterised in that** at the edges of the handling regions (7) running roughly parallel to the longitudinal webs are protrusions (9), which in the set position engage in locking manner behind the longitudinal webs (2) or act thereon.

15. An arrangement according to Claim 13 or 14,
**characterised in that** the edges of the handling regions (17) diverge from the channel shape of the holder (4) to the free ends of the handling regions (7), the interlocking means (9) being formed by the end of the divergence region.

16. An arrangement according to one of Claims 13 to 15,
**characterised in that** the divergence regions are bent slightly at an obtuse angle in relation to the plane which is clamped by the handling regions (7), so that they project in the set assembly position towards the interior of the lattice cableway.

17. An arrangement according to one of Claims 13 to 16,
**characterised in that** the interlocking means (9) are constructed as protrusions projecting from the edges of the handling regions (7) close to their free end, which where appropriate are formed by lugs that are moulded and/or bent at an obtuse angle.

18. An arrangement for the screwless connection of lattice cableways, which consist of lattice cableway portions (1) laid in series, in which ends facing each other can be connected or are connected by means of connection elements whilst retaining a spacing gap, wherein the lattice cableway portions (1) are composed of longitudinal webs (2) and roughly U-shaped transverse webs (3) spaced from each other in the longitudinal direction,
**characterised in that** each connection element consists of a channel-shaped, substantially dimensionally stable holder (4) having a roughly U-shaped cross section, whose leg spacing is adapted to the spacing gap plus the wire diameter, so that the two adjacent transverse webs (3) of the spaced apart lattice cableway portions (1) can be inserted to fit between the legs, wherein constructed preferably at the regions of the legs lying far from the base (4) are shapings (6) which slightly narrow the gap formed by the legs and in the set connection position are adjacent to the web region of the transverse webs (3) situated in the gap and adjacent to the base (5) on the side further from the base (5),
and **in that** moulded on the base (5) at least on one side or on both sides at the leg-free regions is a bending tab (10), which can be swivelled between the transverse webs (3) directed and bent aligned straight with the legs and is preferably supported on the transverse webs (3) in each case on the side further from the legs.

19. An arrangement according to Claim 18,
**characterised in that** the narrowing shapings (6) are constructed at the ends of the channel formed by the holder (4) on either side and at either end of the channel shape in each case.

20. An arrangement according to Claim 18 or 19,
**characterised in that** the length of the channel formed by the holder (4) is only slightly less than the distance between the adjacent longitudinal webs (2) connected to the transverse webs (3).

21. An arrangement according to one of Claims 18 to 20,
**characterised in that** the holders (4) are disposed on the legs and/or at the base of the lattice cableway portions (1).

22. An arrangement according to one of Claims 18 to 21,
**characterised in that** the narrowing shapings (6) in each case project towards one another by the thickness of the leg material or less in relation to the legs of the holder (4).

23. An arrangement according to one of Claims 18 to 22,
**characterised in that** connected to the ends of the legs further from the base (5) of the holder (4) are handling regions (7), which are formed by parts of the holder (4) that run transversely to the channel gap and roughly parallel to the base, and are directed away from one another and in alignment with one another.

24. An arrangement according to one of Claims 18 to 23,
**characterised in that** the narrowing shapings (6) are formed passing from the legs into the handling regions (7).

25. An arrangement according to one of Claims 18 to 24,
**characterised in that** the holder (4) can be placed by its channel situated between the legs onto one of the transverse webs (3) at the point of impact of the lattice cableway portions (1) and can be rotated around the transverse web (3) into the set position covering the other transverse web (3) of the joint.

26. An arrangement according to one of Claims 18 to 25,
**characterised in that** the holder (14) is a sheet steel shaped part.

27. An arrangement according to Claim 26,
**characterised in that** the wall thickness of the holder (4) is less than 2 mm.

28. An arrangement according to one of Claims 23 to 27,
**characterised in that** the length of the handling regions (7) is a multiple of the channel width of the holder, in particular triple.

29. An arrangement according to one of Claims 23 to 28,
**characterised in that** the height of the handling regions (7) is equal to the channel length of the holder (4).

30. An arrangement according to the precharacterising clause of Claim 18, in particular according to one of Claims 18 to 29,
**characterised in that** each connecting element consists of a channel-shaped, substantially dimensionally stable holder (4) having a roughly U-shaped cross section, the leg spacing of which is adapted to the spacing gap plus the wire diameter, so that the two transverse webs (3) to be connected of the lattice cableway portions (1) can be inserted to fit between the legs with a pacing gap,
**in that** connected to the free leg ends of the channel-shaped holder (4) are handling regions (7), which are formed by parts (wings) of the holder (4) that run transversely to the channel gap and roughly parallel to the base (5) and are directed away from each other and in alignment with each other,
**in that** the height of the handling regions (7) is equal to the distance between the adjacent longitudinal webs connected to the transverse webs (3) or is slightly less than the distance,
and **in that** the handling regions (7), in particular the edges of the handling regions (7) running parallel to the longitudinal edges, in the set position in which the holder (4) is placed by its channel onto the transverse webs (3) at the joint and the handling regions (7) lie in the plane clamped by the webs, can be interlocked behind the adjacent longitudinal webs (2) and can be applied to the longitudinal webs (2).

31. An arrangement according to Claim 30,
**characterised in that** on the edges of the handling regions (7) running roughly parallel to the longitudinal webs are constructed protrusions, which in the set position engage in locking manner behind the longitudinal webs (2) or act thereon.

32. An arrangement according to Claim 30 or 31,
**characterised in that** the edges of the handling regions (7) diverge from the channel shape of the holder (4) to the free ends of the handling regions, the interlocking means being formed by the end of the divergence region.

33. An arrangement according to one of Claims 30 to 32,
**characterised in that** the divergence regions are bent at an obtuse angle slightly in relation to the plane which is clamped by the handling regions (7), so that they protrude towards the interior of the lattice cableway in the set assembly position.

34. An arrangement according to one of Claims 30 to 33,
**characterised in that** the interlocking means are constructed as protrusions, which project from the edges of the handling regions (7) close to their free end and, where appropriate, are formed by lugs that are moulded and/or bent at an obtuse angle.

35. An arrangement according to one of Claims 18 to 34,
**characterised in that** the bending tabs (10) comprise a length which roughly corresponds to the channel depth of the holder (4).

36. An arrangement according to one of Claims 18 to 35,
**characterised in that** the bending tabs (10) comprise engagement slots (11) for a tool, in particular for the end of a slotted head screwdriver.

## Revendications

1. Dispositif d'attache sans vis pour canalisations de câbles en treillis, qui sont constituées de tronçons (1) de canalisation en treillis posés en alignement, dont les extrémités en vis-à-vis sont mises bout à bout et sont reliées ou peuvent être reliées au moyen d'éléments de liaison, les tronçons (1) de canalisation en treillis étant composés de tiges longitudinales (2) et de tiges transversales (3) approximativement en forme de U, mutuellement distantes en direction longitudinale, **caractérisé en ce que** chaque élément de liaison est constitué d'une attache (4) du genre gouttière essentiellement indéformable, à section approximativement en forme de U dont l'écartement des branches est adapté au diamètre du tréfilé, de sorte que les deux tiges transversales (3) en application mutuelle des tronçons (1) de canalisation en treillis mis bout à bout peuvent être insérées en ajustement entre les branches, des formations (6) rétrécissant légèrement le passage formé par les branches étant configurées sur les régions des branches qui sont éloignées de la base (5), formations qui, dans la position de liaison de consigne, s'appliquent sur le côté opposé à la base (5) contre les régions des tiges transversales (3) qui se trouvent dans le passage et s'appliquent contre la base (5).

2. Dispositif selon la revendication 1, **caractérisé en ce que** les formations rétrécissantes (6) aux extrémités de la gouttière formée par l'attache (4) sont respectivement configurées de chaque côté et aux deux extrémités de la forme de gouttière.

3. Dispositif selon la revendication 1 ou 2, **caractérisé en ce que** la longueur de la gouttière formée par l'attache (4) n'est que légèrement inférieure à la distance entre les tiges longitudinales voisines (2) raccordées aux tiges transversales (3).

4. Dispositif selon l'une des revendications 1 à 3, **caractérisé en ce que** les attaches (4) sont disposées sur les branches et/ou sur la base des tronçons (1) de canalisation en treillis mis bout à bout.

5. Dispositif selon l'une des revendications 1 à 4, **caractérisé en ce que** les formations rétrécissantes (6) font respectivement saillie, en étant dirigées l'une vers l'autre, de l'épaisseur du matériau des branches ou moins par rapport aux branches de l'attache (4).

6. Dispositif selon l'une des revendications 1 à 5, **caractérisé en ce que** des régions de manipulation (7) se raccordent aux extrémités des branches qui sont opposées à la base (5) de l'attache (4), régions qui sont formées par des parties de l'attache (4) qui s'éloignent l'une de l'autre, en alignement mutuel, en s'étendant transversalement au passage de la gouttière et environ parallèlement à la base (5).

7. Dispositif selon l'une des revendications 1 à 6, **caractérisé en ce que** les formations rétrécissantes (6) sont formées à la transition entre les branches et les régions de manipulation (7).

8. Dispositif selon l'une des revendications 1 à 7, **caractérisé en ce que** l'attache (4) peut être emmanchée, par sa gouttière se trouvant entre les branches, sur une des tiges transversales (3) au point d'aboutement des tronçons (1) de canalisation en treillis, et peut être tournée autour de la tige transversale (3), en tant qu'axe de rotation, dans la position de consigne embrassant conjointement l'autre tige transversale (3) du point d'aboutement.

9. Dispositif selon l'une des revendications 1 à 8, **caractérisé en ce que** l'attache (4) est une pièce façonnée en tôle d'acier.

10. Dispositif selon la revendication 9, **caractérisé en ce que** l'épaisseur de paroi de l'attache (4) est inférieure à 2 mm.

11. Dispositif selon l'une des revendications 6 à 10, **caractérisé en ce que** la longueur des régions de manipulation (7) est égale à un multiple de la largeur de la gouttière de l'attache, notamment au triple.

12. Dispositif selon l'une des revendications 6 à 11, **caractérisé en ce que** la hauteur des régions de manipulation (7) est égale à la longueur de la gouttière de l'attache (4).

13. Dispositif selon le préambule de la revendication 1, notamment selon l'une des revendications 1 à 12, **caractérisé en ce que** chaque élément de liaison est constitué d'une attache (4) du genre gouttière essentiellement indéformable, à section approximativement en forme de U dont l'écartement des branches est adapté au diamètre du tréfilé, de sorte que les deux tiges transversales (3) en application mutuelle des tronçons (1) de canalisation en treillis mis bout à bout peuvent être insérées en ajustement entre les branches, **en ce que** des régions de manipulation (7) se raccordent aux extrémités libres des branches de l'attache (4) du genre gouttière, régions qui sont formées par des parties (ailes) de l'attache (4) qui s'éloignent l'une de l'autre, en alignement mutuel, en s'étendant transversalement au passage de la gouttière et environ parallèlement à la base (5), **en ce que** la hauteur des régions de manipulation (7) est égale à la distance entre les tiges longitudinales voisines raccordées aux tiges transversales (3), ou est légèrement inférieure à cette distance, et **en ce que** les régions de manipulation (7), notamment les arêtes de bords des régions de manipulation (7) s'étendant parallèlement aux tiges longitudinales, peuvent, dans la position de consigne - dans laquelle l'attache (4) est emmanchée par sa rigole sur les tiges transversales (3) au point d'aboutement et les régions de manipulation (7) se trouvent dans le plan sous-tendu par les tiges -, être accrochées derrière les tiges longitudinales voisines (2) ou appliquées contre les tiges longitudinales (2).

14. Dispositif selon la revendication 13, **caractérisé en ce que** des saillies (9) sont configurées sur les arêtes de bords des régions de manipulation (7) s'étendant environ parallèlement aux tiges longitudinales, saillies qui, dans la position de consigne, s'engagent derrière ou sur les tiges longitudinales (2) en produisant un verrouillage.

15. Dispositif selon la revendication 13 ou 14, **caractérisé en ce que** les arêtes de bords des régions de manipulation (7) divergent de la forme de gouttière de l'attache (4) vers les extrémités libres des régions de manipulation (7), les moyens d'accrochage (9) étant formés par la fin de la zone de divergence.

16. Dispositif selon l'une des revendications 13 à 15, **caractérisé en ce que** les zones de divergence sont légèrement recourbées sous un angle obtus par rapport au plan qui est sous-tendu par les régions de manipulation (7), de sorte que, dans la position de consigne de montage, elles font saillie vers l'intérieur de la canalisation de câbles en treillis.

17. Dispositif selon l'une des revendications 13 à 16, **caractérisé en ce que** les moyens d'accrochage (9) sont configurés sous la forme de saillies dépassant des arêtes de bords des régions de manipulation (7) à proximité de l'extrémité libre de ces dernières, saillies qui sont éventuellement formées par des pattes rapportées et/ou recourbées sous un angle obtus.

18. Dispositif d'attache sans vis pour canalisations de câbles en treillis, qui sont constituées de tronçons (1) de canalisation en treillis posés en alignement, dont les extrémités en vis-à-vis sont reliées ou peuvent être reliées au moyen d'éléments de liaison en respectant un passage d'espacement, les tronçons (1) de canalisation en treillis étant composés de tiges longitudinales (2) et de tiges transversales (3) approximativement en forme de U, mutuellement distantes en direction longitudinale, **caractérisé en ce que** chaque élément de liaison est constitué d'une attache (4) du genre gouttière essentiellement indéformable, à section approximativement en forme de U dont l'écartement des branches est adapté au passage d'espacement plus le diamètre du tréfilé, de sorte que les deux tiges transversales voisines (3) des tronçons (1) de canalisation en treillis mutuellement distants peuvent être insérées en ajustement entre les branches, des formations (6) rétrécissant légèrement le passage formé par les branches étant de préférence configurées sur les régions des branches qui sont éloignées de la base (5), formations qui, dans la position de liaison de consigne, s'appliquent sur le côté opposé à la base (5) contre les régions des tiges transversales (3) qui se trouvent dans le passage et s'appliquent contre la base (5), et **en ce qu'**une languette pliable (10) est rapportée sur la base (5) au moins d'un côté ou des deux côtés, sur les régions libres de branches, languette qui peut être, par pliage, rentrée par pivotement entre les tiges transversales (3), dans la direction des branches, et qui s'appuie de préférence respectivement contre les tiges transversales (3) sur le côté opposé aux branches.

19. Dispositif selon la revendication 18, **caractérisé en ce que** les formations rétrécissantes (6) aux extrémités de la gouttière formée par l'attache (4) sont respectivement configurées de chaque côté et aux deux extrémités de la forme de gouttière.

20. Dispositif selon la revendication 18 ou 19, **caractérisé en ce que** la longueur de la gouttière formée par l'attache (4) n'est que légèrement inférieure à la distance entre les tiges longitudinales voisines (2) raccordées aux tiges transversales (3).

21. Dispositif selon l'une des revendications 18 à 20, **caractérisé en ce que** les attaches (4) sont disposées sur les branches et/ou sur la base des tronçons (1) de canalisation en treillis.

22. Dispositif selon l'une des revendications 18 à 21, **caractérisé en ce que** les formations rétrécissantes (6) font respectivement saillie, en étant dirigées l'une vers l'autre, de l'épaisseur du matériau des branches ou moins par rapport aux branches de l'attache (4).

23. Dispositif selon l'une des revendications 18 à 22, **caractérisé en ce que** des régions de manipulation (7) se raccordent aux extrémités des branches qui sont opposées à la base (5) de l'attache (4), régions qui sont formées par des parties de l'attache (4) qui s'éloignent l'une de l'autre, en alignement mutuel, en s'étendant transversalement au passage de la gouttière et environ parallèlement à la base (5).

24. Dispositif selon l'une des revendications 18 à 23, **caractérisé en ce que** les formations rétrécissantes (6) sont formées à la transition entre les branches et les régions de manipulation (7).

25. Dispositif selon l'une des revendications 18 à 24, **caractérisé en ce que** l'attache (4) peut être emmanchée, par sa gouttière se trouvant entre les branches, sur une des tiges transversales (3) au point de liaison des tronçons (1) de canalisation en treillis, et peut être tournée autour de la tige transversale (3) dans la position de consigne embrassant conjointement l'autre tige transversale (3) du point de liaison.

26. Dispositif selon l'une des revendications 18 à 25, **caractérisé en ce que** l'attache (4) est une pièce façonnée en tôle d'acier.

27. Dispositif selon la revendication 26, **caractérisé en ce que** l'épaisseur de paroi de l'attache (4) est inférieure à 2 mm.

28. Dispositif selon l'une des revendications 23 à 27, **caractérisé en ce que** la longueur des régions de manipulation (7) est égale à un multiple de la largeur de la gouttière de l'attache, notamment au triple.

29. Dispositif selon l'une des revendications 23 à 28, **caractérisé en ce que** la hauteur des régions de manipulation (7) est égale à la longueur de la gouttière de l'attache (4).

30. Dispositif selon le préambule de la revendication 18, notamment selon l'une des revendications 18 à 29, **caractérisé en ce que** chaque élément de liaison est constitué d'une attache (4) du genre gouttière essentiellement indéformable, à section approximativement en forme de U dont l'écartement des branches est adapté au passage d'espacement plus le diamètre du tréfilé, de sorte que les deux tiges transversales (3) à attacher des tronçons (1) de canalisation en treillis peuvent être insérées entre les branches en ajustement avec le passage d'espacement, **en ce que** des régions de manipulation (7) se raccordent aux extrémités libres des branches de l'attache (4) du genre gouttière, régions qui sont formées par des parties (ailes) de l'attache (4) qui s'éloignent l'une de l'autre, en alignement mutuel, en s'étendant transversalement au passage de la gouttière et environ parallèlement à la base (5), **en ce que** la hauteur des régions de manipulation (7) est égale à la distance entre les tiges longitudinales voisines raccordées aux tiges transversales (3), ou est légèrement inférieure à cette distance, et **en ce que** les régions de manipulation (7), notamment les arêtes de bords des régions de manipulation (7) s'étendant parallèlement aux tiges longitudinales, peuvent, dans la position de consigne - dans laquelle l'attache (4) est emmanchée par sa rigole sur les tiges transversales (3) au point de liaison et les régions de manipulation (7) se trouvent dans le plan sous-tendu par les tiges -, être accrochées derrière les tiges longitudinales voisines (2) ou appliquées contre les tiges longitudinales (2).

31. Dispositif selon la revendication 30, **caractérisé en ce que** des saillies sont configurées sur les arêtes de bords des régions de manipulation (7) s'étendant environ parallèlement aux tiges longitudinales, saillies qui, dans la position de consigne, s'engagent derrière ou sur les tiges longitudinales (2) en produisant un verrouillage.

32. Dispositif selon la revendication 30 ou 31, **caractérisé en ce que** les arêtes de bords des régions de manipulation (7) divergent de la forme de gouttière de l'attache (4) vers les extrémités libres des régions de manipulation (7), les moyens d'accrochage étant formés par la fin de la zone de divergence.

33. Dispositif selon l'une des revendications 30 à 32, **caractérisé en ce que** les zones de divergence sont légèrement recourbées sous un angle obtus par rapport au plan qui est sous-tendu par les régions de manipulation (7), de sorte que, dans la position de consigne de montage, elles font saillie vers l'intérieur de la canalisation de câbles en treillis.

34. Dispositif selon l'une des revendications 30 à 33, **caractérisé en ce que** les moyens d'accrochage sont configurés sous la forme de saillies dépassant des arêtes de bords des régions de manipulation (7) à proximité de l'extrémité libre de ces dernières, saillies qui sont éventuellement formées par des pattes rapportées et/ou recourbées sous un angle obtus.

35. Dispositif selon l'une des revendications 18 à 34, **caractérisé en ce que** les languettes pliables (10) présentent une longueur qui correspond approximativement à la profondeur de la gouttière des attaches (4).

36. Dispositif selon l'une des revendications 18 à 35, **caractérisé en ce que** les languettes pliables (10) présentent des fentes d'engagement (11) pour un outil, notamment pour la lame d'un tournevis pour vis à tête fendue.
